# EUROPEAN PATENT SPECIFICATION

(11) **EP 2 482 669 B1**
(45) Date of publication and mention of the grant of the patent: **10.07.2013**
(21) Application number: 10775700.7
(22) Date of filing: 28.09.2010
(51) Int. Cl.: A23G 3/38, A23G 3/42, A23G 3/34, A23G 3/50

(54) **CONFECTIONERY PRODUCTS CONTAINING ERYTHRITOL**
KONDITORWAREN ENTHALTEND ERYTHRITOL
PRODUITS DE CONFISERIE CONTENANT DE L'ERYTHRITOL

(30) Priority: 01.10.2009 US 247646 P
(43) Date of publication of application: 08.08.2012
(73) Proprietor: Cargill, Incorporated, Wayzata, MN 55391 (US)
(72) Inventor: NANA, Ravindra, Munster Indiana 46321 (US); VERCAUTEREN, Ronny Leontina Marcel, B-9120 Beveren (BE); WATSON, Mary A., Valparaiso Indiana 46383 (US)
(74) Representative: Elseviers, Myriam
(86) International application number: PCT/EP2010/005904
(87) International publication number: WO 2011/038882

(56) References cited:
- WO-A1-01/19204
- US-A1- 2003 207 003
- US-A1- 2007 224 323

## Description

### Field of the Invention

The present invention relates to a confectionery product more in particular the hard candy, containing edible acids, inulin-based polymers, optionally carrageenan and at least 85% w/w erythritol.

### Background of the Invention

Recent developments in confectionery manufacture have been the replacement of part or all of the sugar alcohol (polyol) in the interest of providing a product having a reduced calorie content and a lower tendency to cause tooth decay. Among the polyols which have been proposed for the manufacture of confectionery are isomalt, maltitol, xylitol, erythritol and mixtures thereof.

EP 0 533 334 describes a process for the production of hard candy characterized in that the maltitol content of the sugar alcohol mixture is more than 77% but less than 86% by weight based on dry substance.

US 4,971,798 describes a hard confection based upon hydrogenated isomaltulose (= isomalt).

US 4,883,685 describes a hard candy which comprises erythritol and saccharides selected from among sugars and sugar alcohols other than erythritol as well as a process for producing the hard candy.

There is still a further need of having a confectionery product more in particular the hard candy, which is based upon polyols and is sugar free.

### Summary of the Invention

The current invention relates to a confectionery product more in particular the hard candy, containing an edible acid, inulin-based polymers and at least 85% w/w erythritol and wherein the ratio of inulin-based polymers to erythritol is 1/99 to 15/85. More specifically it relates to a hard candy consisting of inulin-based polymers, 85-98% w/w erythritol, an edible acid and flavours.

Furthermore the current invention relates to a process for preparing a hard candy by heating at a temperature from 120 to 160°C an erythritol-containing mixture wherein the dry matter is containing inulin-based polymers and at least 85% w/w erythritol.

### Detailed Description

The current invention relates to a confectionery product, preferably a hard candy containing an edible acid, inulin-based polymers and at least 85% w/w erythritol and wherein the ratio of inulin-based polymers to erythritol is 1/99 to 15/85, preferably erythritol is present in an amount of at least 90% w/w.

Confectionery product within the scope of the present invention include grained products such as hard candies, brittle, caramel, and toffee, preferably hard candies.

Inulin-based polymers is a class of polymers related to inulin. Inulin itself which has been extracted from plants for nearly 100 years. Inulin is composed of a mixture of polysaccharides having various molecular weights or degrees of polymerization (DP). In general, inulin consists of fructose units with beta 1-2 bonds and ending in a glucose unit. The addition or subtraction of fructose units affects inulin's molecular weight or degree of polymerization (DP). Inulin is the main carbohydrate in a variety of plants, such as agave, chicory root, dahlia tuber, Jerusalem Artichoke and salsify. Because of the ease of cultivation and harvesting, chicory has become the principal source of inulin today. US 7,045,166 further discloses novel fractions of inulin containing at least two preferably at least three, desirably at least four, different polysaccharides each with differing molecular weights in the range of about 2288 and below and in which said fractions have less than 25% by weight of polysaccharides with molecular weights above 2288, and which exhibit improved water solubility and/or water miscibility. All these types of polysaccharides are suitable inulin-based polymers which can be applied in the current invention.

Carrageenan is a collective term for polysaccharides prepared by alkaline extraction from red seaweed. The basic structure of carrageenan consists of alternating 3-linked -beta-D-galactopyranose (= galactose) and 4-linked-alpha-D-galactopyranose units. The regular backbone structure of the basic structure of carrageenan is disrupted by a more or less ordered distribution of sulphate ester groups. Carrageenan can also contain some methoxy and pyruvate groups. Carrageenans are linear polymers of about 25,000 galactose derivatives. The three main types (iota, kappa and lambda) of carrageenan molecules differ by (1) the types of linkages between the galactose units and (2) the point of attachment of the sulphate groups to the galactose units. These apparently small differences in chemical constitution and structure make major differences in the properties of each type of molecule.

Erythritol is a carbohydrate-based polyol, i;e; a tetriitol represented by the chemical formula C₄H₁₀O₄ and which has an excellent appearance in the form of white crystals and it is similar to the appearance of granulated sugar, sucrose. It is non-digestive, providing zero calories and is non cariogenic.

The ratio of inulin-based polymers to erythritol in the confectionary product is 1/99 to 15/85, preferably 1/99 to 10/90, more preferably 2/98 to 8/92, even more preferably 2.5/97.5 to 7/93 while erythritol is being present for at least 85%, preferably 90% based on dry weight of the confectionery product.

Furthermore, the confectionery product, more in particular the hard candy, is comprising an edible acid. Suitable acids are selected from the group consisting of malic acid, fumaric acid, lactic acid, tartaric acid, glucono-delta lactone, salts of gluconic acid, phosphoric acid, succinic acid, adipic acid, ascorbic acid, acetic acid, citric acid and mixture of two or more thereof. The acids are added in a quantity based on dry matter of the confectionery product in an amount of 0.2 to 4%, preferably from 0.2 to 2%, more preferably from 0.2% to 0.5%.

Furthermore, carrageenan is added in an amount such that the confectionery product is still containing at least 85%, preferably at least 90% of erythritol based upon dry weight of confectionery.

The confectionery product more in particular the hard candy, is further comprising flavours, high-intensity sweeteners and/or colouring agents.

The flavours are selected from mint flavour, chocolate mint flavour, bubblegum flavour, apple spice flavour, black cherry flavour, pineapple flavour, cola flavour, grape flavour, cherry flavour, apple flavour and citrus flavours such as orange flavour, lemon flavour, lime flavour, fruit punch and mixtures of two or more thereof. Preferred flavours are chocolate mint, bubblegum, apple spice, black cherry, and pineapple. The amount of flavour depends upon the flavor or flavors selected, the flavor impression desired and the form of flavour used.

A high-intensity sweetener, which can be used as non-nutritive sweetener can be selected from the group consisting of aspartame, acesulfame salts such as acesulfame-K, saccharins (e.g. sodium and calcium salts), cyclamates (e.g. sodium and calcium salts), sucralose, alitame, neotame, steviosides, glycyrrhizin, neohesperidin dihydrochalcone, monellin, thaumatin, brazzein, mixtures of two or more thereof, and the like. Actually any other natural derived high-intensity sweetener is suitable as well.

If desired, colouring agents can also be added as well. Any water-soluble colouring agent approved for food use can be utilized for the current invention.

The current invention relates to a process for preparing a hard candy by heating at a temperature from 120 to 160°C an erythritol-containing mixture wherein the dry matter is containing inulin-based polymers and at least 85% w/w erythritol.

The process is further characterised in that at the end of the heating period a vacuum of 0.6 to 0.8 bar is applied.

Finally the current invention relates to a dry mix containing inulin-based polymers and at least 85% w/w erythritol wherein the ratio of inulin-based polymers to erythritol is 1/99 to 15/85, or a dry mix which is further containing carrageenan and/or an edible acid. Carrageenan is added in an amount such that the confectionery product is still containing at least 85%, preferably at least 90% of erythritol based upon dry weight of confectionery. The edible acid is added in a quantity based on dry matter of the confectionery product in an amount of 0.2 to 4%, preferably from 0.2 to 2%, more preferably from 0.2% to 0.5%.

Finally the confectionery product more in particular the hard candy, is sugar free, provides zero calories and can be labeled as natural and/or organic.

Disadvantages such as uneven crystallization, uneven surface, grainy sandy texture and brittleness have been overcome by the confectionery product of the current invention.

The invention will hereunder be illustrated in the form of the following examples.

### Examples

### Analytical methods

Texture analysis was conducted on the Texture Technologies Corp. equipment, TA-XT2i Texture Analyser. The program setting was as follows:

| | | |
|---|---|---|
| TA Mode: | | Measure Force in Compression |
| | TA Option: | Return to Start |
| | Pre-Test Speed: | 1.0 mm/s |
| | Test Speed: | 5.0 mm/s |
| | Post Speed: | 10.0 mm/s |
| | Test Distance: | 4.0 mm |
| | Trigger Value: | 5g |
| | PPS: | 400.00 |
| | Probe: | P0.5HS ½" Hemispherical Plastic using a 25kg load cell. |
| | Accessory: | Heavy Duty Platform (HDP/90) |
| Results: | | Force (Hardness) |
| | | Distance (Fracturability) |

Sample Preparation: All samples were held at ambient room temperature, 21-24°C, stored in plastic storage bags, removed from bags prior to testing. All samples weighed ± 3.7g each, 5 samples from each batch were measured, except where noted.

Test Set Up: Secured the HDP/90 onto the machine base. Calibrate the probe prior to testing samples. Placed the sample on the blank plate of the HDP/90 and position centrally under the probe. Commence test.

Two characteristics were tested on the texture analyzer; hardness and fracturability. Below are definitions from Texture Technology on hardness and fracturability.

Hardness is the peak force of the first compression of the candy.

Not all products fracture; but when they do, the fracturability point occurs where the plot has its first significant peak (where the force falls off) during the probe's first compression of the product.

Hardness and fracturability are two completely different parameters that are not comparable with each other.

### Example 1

### Recipe

91.9 w/w% erythritol (Cargill 16961)
7.5 w/w% inulin (Cargill F97)
0.3 w/w% bubblegum flavor
0.3 w/w% citric acid
0.01w/w% colouring agent

### Cooking- Method

200 erythritol containing mixture (erythritol and inulin) was placed in a cooking vessel on a heating plate without water addition. The dry blend was cooked to 130°C until liquefaction of the mixture.

### Shaping - Depositing method

Flavor, acid and coloring agent were mixed in. Final step vacuum 0.6 to 0.8 bar. The hot mass was dosed in Teflon coated aluminum moulds and allowed cooling further, followed by demoulding.

| Hardness | Fracturability |
|---|---|
| 29190 | 1.18 |

The analytical results showed that the hard candies had a hard texture and did not break easily.

### Example 2

### Recipe

97.9 w/w% erythritol (Cargill 16961)
2.0 w/w% inulin (Cargill DS2)
0.1 w/w% carrageenan (Cargill)
0.3 w/w% bubblegum flavor
0.3 w/w% citric acid
0.01w/w% colouring agent

### Cooking - Method

200 erythritol containing mixture (erythritol, inulin and carrageenan) was placed in a cooking vessel on a heating plate without water addition. The dry blend was cooked to 130°C until liquefaction of the mixture.

### Shaping - Depositing method

Flavor, acid and coloring agent were mixed in. Final step vacuum 0.6 to 0.8 bar. The hot mass was dosed in Teflon coated aluminum moulds and allowed cooling further, followed by demoulding.

The analytical results showed that the hard candies had a very hard texture and did not break easily.

### Example 3 Different acids

### Recipe

98.5 w/w% erythritol (Cargill 16961)
1.0 w/w% inulin (Cargill DS2)
0.3 w/w% bubblegum flavor
0.5 w/w% acid
0.01w/w% colouring agent

### Cooking - Method

200 erythritol containing mixture (erythritol and inulin) was placed in a cooking vessel on a heating plate without water addition. The dry blend was cooked to 130°C until liquefaction of the mixture.

### Shaping - Depositing method 3A

Flavor, gluconolactone and coloring agent were mixed in Final step vacuum 0.6 to 0.8 bar. The hot mass was dosed in Teflon coated aluminum moulds and allowed cooling further, followed by demoulding.

### Shaping - Depositing method 3B

Flavor, ascorbic acid, and coloring agent were mixed in.Final step vacuum 0.6 to 0.8 bar. The hot mass was dosed in Teflon coated aluminum moulds and allowed cooling further, followed by demoulding.

Both methods (3A and 3B) resulted in very hard candies.

| Hardness | Fracturability | Ingredients (98.5% erythritol, 1% inulin and .5% acid) |
|---|---|---|
| 32763 | 1.13 | Ascorbic acid |
| 28780 | 1.01 | Glucono delta lactone |

## Claims

1. A hard candy containing an edible acid, inulin-based polymers and at least 85% w/w erythritol and wherein the ratio of inulin-based polymers to erythritol is 1/99 to 15/85.

2. The hard candy according to claim 1 wherein it further comprises carrageenan.

3. The hard candy according to claim 2 wherein it is further comprising flavours, high-intensity sweeteners, and/or colouring agents.

4. The hard candy according to claim 1 wherein it is consisting of inulin-based polymer, 85-98% w/w erythritol, edible acid and favours.

5. A process for preparing a hard candy by heating at a temperature from 120°C to 160°C an erythritol-containing mixture wherein the dry matter is containing inulin-based polymers and at least 85% w/w erythritol.

6. The process according to claim 5 wherein at the end of the heating period a vacuum of 0.6 to 0.8 bar is applied.

7. A dry mix containing inulin-based polymers and at least 85% w/w erythritol and wherein the ratio of inulin-based polymers to erythritol is 1/99 to 15/85.

8. A dry mix according to claim 7 wherein the dry mix is further comprising carrageenan.

9. A dry mix according to claim 7 wherein the dry mix is further comprising an edible acid.

## Patentansprüche

1. Lutschbonbon, enthaltend eine essbare Säure, Polymere auf Inulinbasis und mindestens 85 Gewichtsprozent Erythritol, und wobei das Verhältnis von Polymeren auf Inulinbasis zu Erythritol 1/99 bis 15/85 ist.

2. Lutschbonbon nach Anspruch 1, wobei dieses des Weiteren Carrageen umfasst.

3. Lutschbonbon nach Anspruch 2, wobei dieses des Weiteren Aromen, Süßstoffe hoher Intensität und/oder Farbstoffe umfasst.

4. Lutschbonbon nach Anspruch 1, wobei dieses aus Polymer auf Inulinbasis, 85 bis 98 % Gewichtsprozent Erythritol, essbarer Säure und Aromen besteht.

5. Verfahren zum Herstellen eines Lutschbonbons durch Erwärmen einer erythritolhaltigen Mischung bei einer Temperatur von 120°C bis 160°C, wobei die Trockensubstanz Polymere auf Inulinbasis und mindestens 85 Gewichtsprozent Erythritol enthält.

6. Verfahren nach Anspruch 5, wobei am Ende der Erwärmungsperiode ein Vakuum von 0,6 bis 0,8 Bar angelegt wird.

7. Trockenmischung, die Polymere auf Inulinbasis und mindestens 85 Gewichtsprozent Erythritol enthält, und wobei das Verhältnis von Polymeren auf Inulinbasis zu Erythritol 1/99 bis 15/85 ist.

8. Trockenmischung nach Anspruch 7, wobei die Trockenmischung des Weiteren Carrageen umfasst.

9. Trockenmischung nach Anspruch 7, wobei die Trockenmischung des Weiteren eine essbare Säure umfasst.

## Revendications

1. Confiserie dure contenant un acide comestible, des polymères à base d'inuline, et au moins 85 % M/M d'érythritol et dans laquelle le rapport des polymères à base d'inuline sur l'érythritol est de 1/99 à 15/85.

2. Confiserie dure selon la revendication 1, laquelle comprend en outre de la carraghénine.

3. Confiserie dure selon la revendication 2, laquelle comprend en outre des saveurs, des édulcorants de forte intensité, et/ou des agents de coloration.

4. Confiserie dure selon la revendication 1, laquelle consiste en polymère à base d'inuline, 85 à 98 % M/M d'érythritol, acide comestible et saveurs.

5. Processus pour préparer une confiserie dure en chauffant à une température de 120 °C à 160 °C un mélange contenant de l'érythritol dans lequel la matière sèche contient des polymères à base d'inuline et au moins 85 % M/M d'érythritol.

6. Processus selon la revendication 5, dans lequel, à la fin de la période de chauffage, un vide de 0,6 à 0,8 bar est appliqué.

7. Mélange sec contenant des polymères à base d'inuline et au moins 85 % M/M d'érythritol et dans lequel le rapport des polymères à base d'inuline sur l'érythritol est de 1/99 à 15/85.

8. Mélange sec selon la revendication 7, dans lequel le mélange sec comprend en outre de la carraghénine.

9. Mélange sec selon la revendication 7, dans lequel le mélange sec comprend en outre un acide comestible.
